# FASCICULE DE BREVET EUROPEEN

(11) **EP 2 880 747 B1**
(45) Date de publication et mention de la délivrance du brevet: **01.05.2019**
(21) Numéro de dépôt: 13773395.2
(22) Date de dépôt: 26.07.2013
(51) Int. Cl.: H02K 11/04

(54) **ROTOR D'ALTERNATEUR**
ROTOR FÜR EINEN WECHSELSTROMGENERATOR
ALTERNATOR ROTOR

(30) Priorité: 01.08.2012 FR 1257502
(43) Date de publication de la demande: 10.06.2015
(73) Titulaire: Moteurs Leroy-Somer, 16000 Angouleme (FR)
(72) Inventeur: VOHLGEMUTH, Patrick, F-16110 La Rochefoucauld (FR)
(74) Mandataire: Nony
(86) Numéro de dépôt international: PCT/IB2013/056147
(87) Numéro de publication internationale: WO 2014/020510

(56) Documents cités:
- EP-A1- 1 734 644
- EP-A1- 1 788 693
- FR-A1- 2 944 655
- US-A1- 2010 123 373
- US-A1- 2010 283 357

## Description

La présente invention concerne les alternateurs et plus particulièrement les rotors d'alternateurs.

La plupart des alternateurs connus utilisés dans les groupes électrogènes industriels sont de type « brushless », étant équipés d'un système d'excitation électromagnétique et d'une machine principale. Il est alors nécessaire de disposer un circuit électronique d'alimentation, notamment un redresseur, entre l'induit d'excitatrice et la roue polaire de la machine principale de façon à alimenter la roue polaire en courant continu.

Les redresseurs tournants connus sont constitués de diodes en boîtier élémentaire, de différents formats, connectées de telle sorte qu'elles constituent un pont redresseur triphasé. Ces diodes sont assemblées et connectées sur des supports de différentes formes assurant l'isolation électrique par rapport aux masses métalliques de l'alternateur et la continuité depuis les bobinages de l'induit d'excitatrice vers les bobinages de la roue polaire.

La confection et/ou l'assemblage de tels redresseurs nécessite la mise en oeuvre d'un grand nombre de composants différents en plus des diodes, tels que des conducteurs et isolants électriques, des éléments de connectique et des fixations.

La demande US 2010/0283357 décrit un rotor d'alternateur dont le redresseur comporte des diodes maintenues serrées entre des bossages de lames conductrices élastiques et la surface intérieure d'anneaux conducteurs du redresseur.

La demande FR 2 944 655 divulgue un dispositif de fixation d'une diode sous forme de galette cylindrique sur un rotor de machine tournante. La diode est reçue dans l'évidement circulaire d'un boîtier, comportant un capot amovible, fixé sur le rotor au moyen d'une vis.

Les diodes étant des composants à capacité de courant limitée, elles font partie des pièces de maintenance courante sur un alternateur. Les modes de montage et de raccordement connus imposent un temps de déconnexion et de démontage relativement important, puisque, pour extraire les diodes, il faut le plus souvent déconnecter les entrées provenant de l'induit d'excitatrice, les sorties allant vers la roue polaire et les fixations.

Il existe un besoin pour simplifier le montage du circuit électronique d'alimentation de l'inducteur de roue polaire d'un alternateur et pour faciliter la maintenance des composants électriques de l'alternateur.

L'invention vise à satisfaire ce besoin, et elle y parvient grâce à un rotor d'alternateur selon la revendication 1.

Grâce à l'invention, les composants électroniques peuvent être aisément retirés du rotor pour être remplacés et/ou testés, facilitant la maintenance de l'alternateur, aucune intervention sur les connexions n'étant nécessaire.

Le support peut être réalisé dans une matière plastique isolante, par exemple une matière thermoplastique telle que du polyamide.

Les bornes peuvent constituer des fiches de type *fast on,* de préférence femelles, les composants électroniques étant pourvus de fiches de type *fast on* complémentaires, de préférence mâles.

Dans des variantes, d'autres types de fiches peuvent être utilisés, en fonction des composants disponibles sur le marché.

L'utilisation de bornes sous forme de fiches permet un montage rapide par enfichage, simple et sécurisé, des composants électroniques du circuit électronique d'alimentation sur le support. La direction d'enfichage est de préférence parallèle à l'axe de rotation du rotor.

Les pistes conductrices peuvent être reliées électriquement à des inserts tels que des goujons filetés permettant de connecter des cosses, reliées par exemple aux câbles de l'inducteur de roue polaire. Les pistes conductrices sont par exemple réalisées avec des élargissements traversés par les goujons. Ces derniers peuvent être fixés par surmoulage sur le support. Une varistance montée sur un circuit imprimé, servant d'écrêteur de tension entre les bornes + et - du bus continu, dans le but de protéger les diodes en cas de retour de pic de tension dans certaines conditions d'utilisation, peut être montée sur les goujons.

Le nombre et le type de composants électroniques du circuit électronique d'alimentation peuvent varier selon les exemples de mise en oeuvre de l'invention.

Les composants électroniques peuvent être des ponts de diodes, auquel cas ils sont de préférence monophasés. L'induit d'excitatrice est avantageusement triphasé et dédoublé, un pont de diodes étant alors associé à chaque phase. Les ponts de diodes peuvent être interconnectés, de façon à obtenir un double redresseur triphasé.

Ainsi, le circuit électronique d'alimentation comporte dans un exemple de mise en oeuvre de l'invention trois composants électroniques constitués chacun par un pont de diodes monophasé. Chaque pont comporte quatre diodes de relativement faible calibre et donc de moindre coût. Le dédoublement du bobinage triphasé de l'induit d'excitatrice associé au double redresseur triphasé permet de délivrer un fort courant continu à la roue polaire malgré le faible calibre unitaire des diodes, ce qui est particulièrement avantageux.

Le verrouillage mécanique des composants électroniques dans les bornes peut se faire par boulonnage. De préférence, des inserts tels que des goujons filetés sont présents à demeure sur le support, et les composants présentent une ouverture qui est engagée sur un goujon correspondant, puis un écrou est mis en place sur le goujon. Ce dernier peut être fixé sur le support par surmoulage.

Les pistes conductrices peuvent être maintenues par surmoulage sur le support. En variante, les pistes sont maintenues par des reliefs du support, étant rapportées sur celui-ci.

Le support peut être réalisé en une seule partie, par moulage de matière thermoplastique.

Dans une variante, le support est réalisé en plusieurs pièces, par exemple une base et un couvercle. Des chemins peuvent être formés dans la base pour accueillir les pistes conductrices, celles-ci étant notamment maintenues en place par des reliefs de la base.

Le couvercle du support comporte avantageusement des ouvertures agencées de telle sorte que les bornes et les goujons filetés destinés au verrouillage des composants électroniques soient accessibles depuis l'extérieur. Les ouvertures du couvercle donnant accès aux bornes peuvent comporter des facettes inclinées facilitant l'enfichage, en convergeant vers l'axe d'enfichage et la borne.

Les bornes peuvent être reçues dans des logements prévus sur le support, et définis par des parois moulées avec celui-ci. Ces logements présentent de préférence une section transversale rectangulaire lorsque les bornes sont de type *fast on,* avec au moins une fente pour le passage de la piste conductrice reliée à la borne.

Le support est de préférence disposé sur le rotor de telle façon que les bornes soient accessibles de l'extérieur, permettant un montage et un démontage aisés des composants électroniques.

Le support est de préférence disposé sur une face de l'induit d'excitatrice, les bornes faisant saillie vers l'extérieur.

Le support peut être maintenu par des vis qui s'implantent par exemple dans le paquet de tôles magnétiques d'induit d'excitatrice.

Selon un autre de ses aspects, l'invention concerne un alternateur comportant un rotor selon l'invention, tel que défini précédemment.

L'invention pourra être mieux comprise à la lecture de la description détaillée qui va suivre, d'exemples non limitatifs de mise en oeuvre de celle-ci, et à l'examen du dessin annexé, sur lequel :
- la figure 1 est une représentation schématique du circuit électrique d'un exemple de rotor selon l'invention,
- la figure 2 représente en perspective, de façon schématique et partielle, un rotor selon l'invention,
- les figures 3 à 5 illustrent la mise en place de différents éléments sur un support selon l'invention, et
- la figure 6 représente une variante de réalisation du circuit d'alimentation selon l'invention.

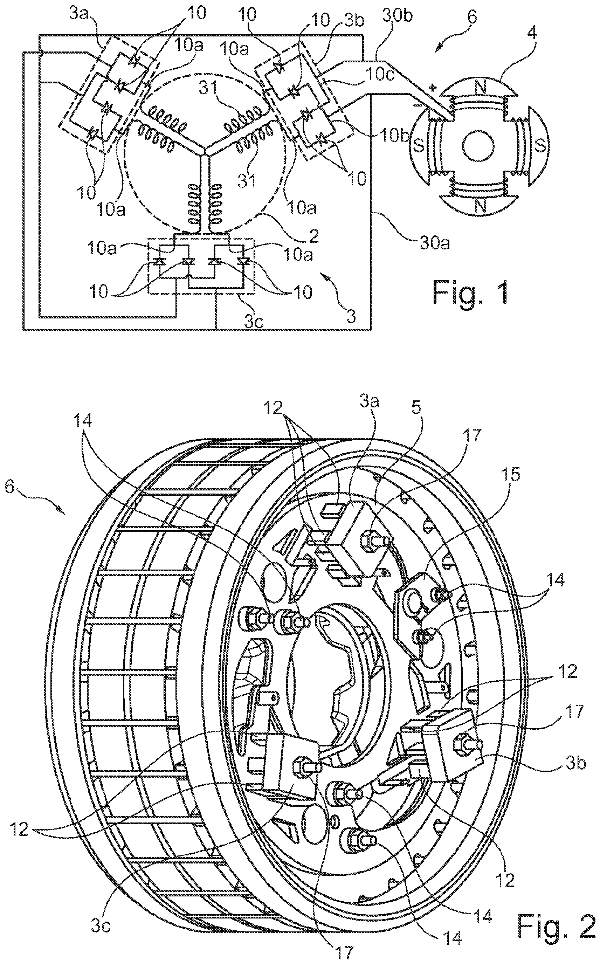

Un rotor 6 d'alternateur selon l'invention, représenté schématiquement à la figure 1, comporte un inducteur de roue polaire 4, un induit d'excitatrice 2, et un circuit électronique d'alimentation 3 de l'inducteur de roue polaire 4 à partir de l'induit d'excitatrice 2.

L'induit d'excitatrice 2 est, dans l'exemple décrit, triphasé et dédoublé, mais pourrait avoir un nombre de phases et un agencement différents.

Le circuit électronique d'alimentation 3 comporte dans l'exemple décrit trois composants électroniques 3a, 3b, 3c constitués chacun par un pont de diodes monophasé, comportant quatre diodes 10.

Chaque pont de diodes est associé à une phase de l'induit d'excitatrice 2, les trois ponts étant interconnectés entre eux, comme illustré à la figure 1. En particulier, deux diodes montées tête-bêche d'un pont ont une jonction commune reliée à une borne d'un enroulement 31 d'une phase et débitent par leurs sorties - et + respectives 10b et 10c sur un bus continu 30a, 30b relié à l'inducteur de roue polaire 4. Le dédoublement du bobinage est obtenu en faisant un bobinage classique mais avec deux fils en parallèle au lieu d'un seul.

Comme représenté à la figure 2, le circuit électronique d'alimentation 3 comporte un support 5 en matériau isolant, avantageusement réalisé dans une matière thermoplastique, portant notamment les composants électroniques 3a, 3b, 3c.

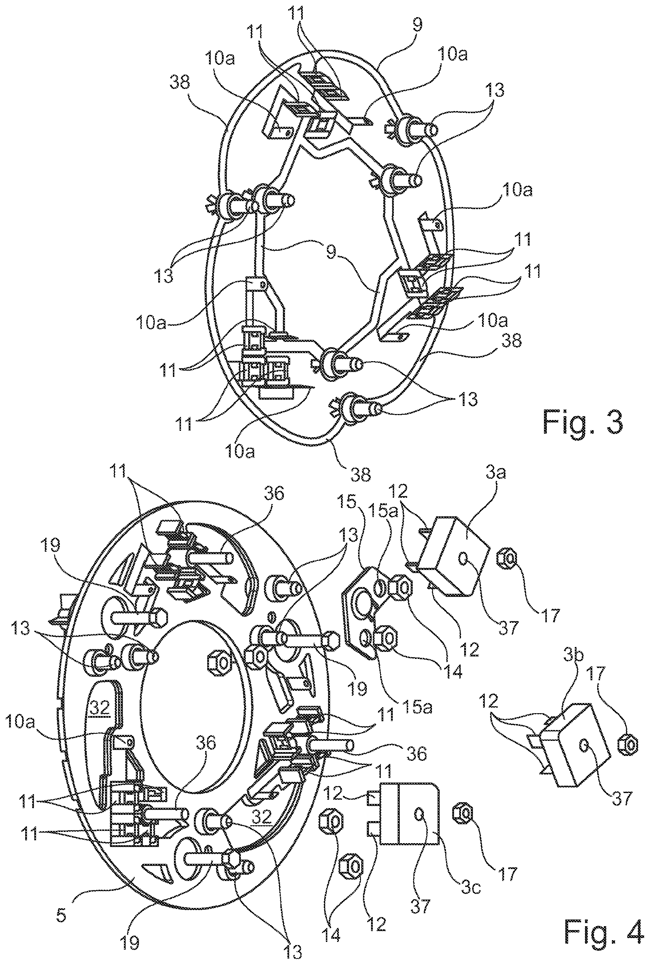

Le circuit d'alimentation 3 comporte des pistes conductrices 9, reliant des goujons filetés 13 à des bornes 11, comme représenté à la figure 3.

Des cosses non représentées à la figure 4, reliées aux câbles de l'inducteur de roue polaire 4 sont fixées sur les goujons 13.

Un circuit imprimé portant une varistance 15, visible à la figure 4, pourvu de trous 15a pour le passage des goujons 13, peut être fixé sur ceux-ci à 120° desdites cosses.

Comme représenté à la figure 2, le support 5 est préférentiellement disposé sur une face extérieure de l'induit d'excitatrice 6, de telle façon que les bornes 11 soient accessibles de l'extérieur, rendant aisé le montage et le démontage des composants électroniques 3a, 3b, 3c.

Le support 5 est maintenu sur l'induit d'excitatrice par des vis 19, lesquelles s'implantent par exemple dans le paquet de tôles constituant la masse magnétique du rotor.

Dans l'exemple considéré, les bornes 11 sont réalisées de façon monolithique avec au moins une partie des pistes 9, par découpe et pliage d'une tôle métallique conductrice, par exemple en cuivre ou en alliage conducteur.

Les bornes 11 sont de préférence du type *fast on* femelle, comportant deux ailes rabattues l'une vers l'autre, pour recevoir des fiches *fast on* mâles 12 portées par les composants 3a, 3b et 3c.

Les pistes 9 peuvent également se raccorder à des fiches mâles constituant les jonctions 10a du schéma de la figure 1, et reliées aux câbles de l'induit d'excitatrice 2. La connexion peut s'effectuer par brasage du fil de bobinage sur la fiche.

Les pistes 9 peuvent être maintenues sur le support 5 de diverses façons, par exemple par surmoulage comme dans l'exemple des figures 2 à 4. Dans ce cas, dépassent de la matière thermoplastique du support 5 les goujons 13 et les bornes 11 et 10a. Des ajours 32 peuvent être formés à travers le support 5 pour économiser de la matière thermoplastique et alléger le support.

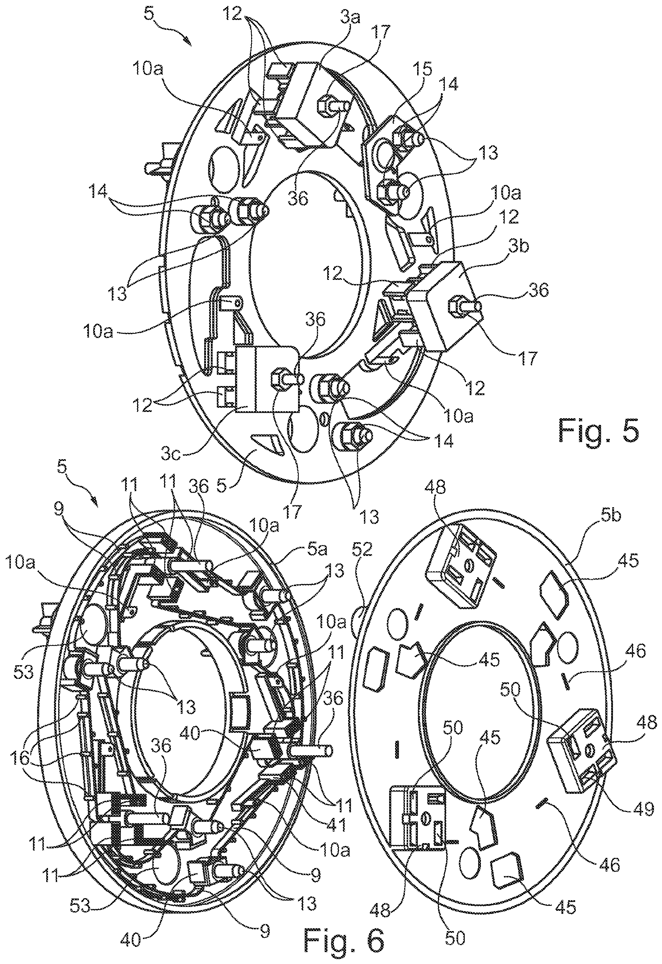

Dans la variante représentée à la figure 6, les pistes 9 sont maintenues autrement que par surmoulage sur le support 5, par des reliefs 16 notamment, comme cela sera décrit plus en détail dans la suite.

Les bornes 11 sont disposées de façon à ce que les composants électroniques 3a, 3b, 3c puissent être enfichés par un mouvement de translation, par exemple parallèle à l'axe de rotation du rotor comme dans les exemples illustrés.

Les composants 3a, 3b et 3c sont verrouillés mécaniquement en place sur les bornes 11.

Ce verrouillage peut s'effectuer, comme illustré, grâce à des goujons filetés 36 disposés entre les bornes, et à une ouverture correspondante 37 réalisée à travers le boîtier des composants 3a, 3b ou 3c. Des écrous 17 sont vissés sur les goujons 36 pour maintenir en place les composants 3a, 3b et 3c.

Dans l'exemple des figures 3 à 5, le support 5 est monolithique.

Dans la variante représentée à la figure 6, le support 5 est réalisé avec une base 5a et un couvercle 5b, tous deux réalisés par moulage dans une matière thermoplastique.

Des chemins sont moulés avec la base 5a pour accueillir et guider les pistes conductrices 9. Ces chemins peuvent comporter des reliefs 16 de maintien des pistes 9, lesquelles sont par exemple aplaties selon un plan parallèle à l'axe de rotation du rotor, à la différence de l'exemple de la figure 3 où les pistes sont orientées, pour la majeure partie des portions 38 s'étendant entre les bornes 11, avec leur plan perpendiculaire à l'axe de rotation.

Les reliefs 16 se présentent par exemple sous la forme de picots parallèles à l'axe de rotation.

On voit sur la figure 6 que des parois 40 de logements peuvent être moulées avec la base 5a autour des bornes 11, les logements présentant une section rectangulaire avec une ou plusieurs fentes 41 vers l'extérieur pour le passage des pistes 9.

Le couvercle 5b du support 5 comporte des ouvertures 45 agencées de telle sorte que les goujons filetés 13 puissent faire saillie hors du couvercle, des ouvertures 46 pour les fiches 10a et des bossages 48 pourvus d'ouvertures 49 pour l'accès aux bornes 11. Ces ouvertures 49 peuvent être définies par des facettes 50 convergeant vers la borne 11 et l'axe d'enfichage. Le couvercle 5b peut être moulé avec des plots 52 qui s'engagent dans des ouvertures correspondantes 53 de la base 5a, et sont traversés par les vis 19.

L'invention n'est pas limitée aux exemples qui viennent d'être décrits.

Bien que le circuit électronique d'alimentation de l'inducteur de roue polaire soit un redresseur dans les exemples illustrés, d'autres composants que des ponts de diodes peuvent être utilisés, par exemple des transistors et/ou des modules de communication radiofréquence ou de régulation, l'inducteur de roue polaire pouvant être alimenté selon une régulation PWM par exemple.

Des fiches autres que des fiches *fast on* peuvent être utilisées.

Les goujons filetés 13 peuvent être remplacés par d'autres types d'inserts.

Les pistes conductrices 9 peuvent être réalisées autrement que par découpe, par exemple par gravure électrochimique, le support 5 comportant un circuit imprimé.

Le rotor peut être polyphasé autre que triphasé tout en restant dédoublé, de sorte que chaque phase est associée à un pont redresseur, chaque moitié du pont redressant en double alternance la tension d'un enroulement de la phase.

## Revendications

1. Rotor (6) d'alternateur, comportant :
- un inducteur de roue polaire (4),
- un induit d'excitatrice (2), et
- un circuit électronique d'alimentation (3) de l'inducteur de roue polaire (4) à partir de l'induit d'excitatrice (2),
le rotor (6) étant **caractérisé par le fait que** le circuit électronique d'alimentation (3) comporte un support (5) en matériau isolant et des pistes conductrices (9) maintenues par ledit support, ces pistes (9) reliant les conducteurs d'excitatrice à des bornes (11) dans lesquelles des composants électroniques (3a, 3b, 3c) du circuit électronique d'alimentation (3) sont enfichés et verrouillés mécaniquement en place, ***caractérisé* par le fait que** les bornes (11) sont réalisées de façon monolithique avec au moins une partie des pistes conductrices (9), et **par le fait que** les bornes (11) sont réalisées par pliage du métal servant à réaliser les pistes conductrices (9), à partir d'une découpe dudit métal en feuille.

2. Rotor selon la revendication 1, les bornes (11) constituant des fiches *fast on,* de préférence femelles, les composants électroniques (3a, 3b, 3c) étant pourvus de fiches (12) *fast on* complémentaires, de préférence mâles.

3. Rotor selon l'une quelconque des revendications précédentes, les pistes conductrices (9) étant électriquement en contact avec des goujons filetés (13) permettant de fixer des cosses (14) reliées à des câbles de l'alternateur, de préférence des câbles reliés à l'inducteur de roue polaire (4).

4. Rotor selon l'une quelconque des revendications précédentes, les composants électroniques (3a, 3b, 3c) étant des ponts de diodes, de préférence monophasés.

5. Rotor selon l'une quelconque des revendications précédentes, l'induit d'excitatrice (2) étant polyphasé, notamment triphasé, et dédoublé, un pont de diodes monophasé étant associé à chaque phase, les ponts de diodes étant interconnectés, et débitant de préférence sur un bus continu (30a, 30b).

6. Rotor selon l'une quelconque des revendications précédentes, le verrouillage mécanique des composants électroniques (3a, 3b, 3c) s'effectuant par boulonnage, notamment à l'aide de goujons (36) fixés sur le support (5).

7. Rotor selon l'une quelconque des revendications précédentes, les pistes conductrices (9) étant maintenues par surmoulage de matière thermoplastique sur le support (5).

8. Rotor selon l'une quelconque des revendications 1 à 6, les pistes conductrices (9) étant maintenues autrement que par surmoulage sur le support (5), notamment à l'aide de reliefs (16) du support.

9. Rotor selon l'une quelconque des revendications précédentes, le support (5) étant disposé sur une face d'extrémité de l'induit d'excitatrice (6), les bornes (11) faisant saillie vers l'extérieur.

10. Rotor selon l'une quelconque des revendications précédentes, le support (5) étant réalisé avec une base (5a) et un couvercle (5b) comportant des ouvertures (45, 46, 49), des chemins étant formés dans la base (5a) du support (5) pour maintenir les pistes conductrices (9).

11. Rotor selon la revendication précédente, des extrémités des pistes conductrices (9) étant reçues dans des logements de la base (5a) du support (5), notamment formés par des parois (40) moulées avec le support.

12. Alternateur comportant un rotor (6) selon l'une quelconque des revendications précédentes.

## Patentansprüche

1. Rotor (6) eines Wechselstromgenerators, der Folgendes aufweist:
- einen Polradinduktor (4),
- einen Erregeranker (2), und
- eine elektronische Schaltung zur Versorgung (3) des Polradinduktors (4) ausgehend von dem Erregeranker (2), wobei der Rotor (6) **dadurch gekennzeichnet ist, dass** die elektronische Schaltung zur Versorgung (3) einen Träger (5) aus isolierendem Material und Leiterbahnen (9), die von dem Träger gehalten werden, aufweist, wobei diese Bahnen (9) die Erregerleiter mit Anschlüssen (11) verbindet, in welche elektronische Komponenten (3a, 3b, 3c) der elektronischen Schaltung zur Versorgung (3) eingesteckt und mechanisch arretiert sind, **dadurch gekennzeichnet, dass** die Anschlüsse (11) mit mindestens einem Abschnitt der Leiterbahnen (9) einstückig ausgebildet sind, und dadurch, dass die Anschlüsse (11) durch Falten des Metalls, das zum Ausbilden der Leiterbahnen (9) dient, anhand eines Zuschnitts des Metallblechs ausgebildet werden.

2. Rotor nach Anspruch 1, wobei die Anschlüsse (11) Fast-On-Stecker bilden, vorzugsweise weibliche, wobei die elektronischen Komponenten (3a, 3b, 3c) mit ergänzenden Fast-On-Steckern (12) versehen sind, vorzugsweise männlichen.

3. Rotor nach einem der vorhergehenden Ansprüche, wobei die Leiterbahnen (9) elektrisch mit Gewindebolzen (13) in Kontakt stehen, die es gestatten, Kabelschuhe (14) zu fixieren, die mit Kabeln des Wechselstromgenerators verbunden sind, vorzugsweise Kabeln, die mit dem Polradinduktor (4) verbunden sind.

4. Rotor nach einem der vorhergehenden Ansprüche, wobei die elektronischen Komponenten (3a, 3b, 3c) Diodenbrücken sind, vorzugsweise einphasige.

5. Rotor nach einem der vorhergehenden Ansprüche, wobei der Erregeranker (2) mehrphasig, insbesondere dreiphasig, und aufgeteilt ist, wobei eine einphasige Diodenbrücke mit jeder Phase in Verbindung steht, wobei die Diodenbrücken miteinander verbunden sind und vorzugsweise über einen Gleichstrombus (30a, 30b) abgeben.

6. Rotor nach einem der vorhergehenden Ansprüche, wobei das mechanische Einrasten der elektronischen Komponenten (3a, 3b, 3c) per Bolzenverbindung erfolgt, insbesondere mithilfe von Bolzen (36), die auf dem Träger (5) befestigt sind.

7. Rotor nach einem der vorhergehenden Ansprüche, wobei die Leiterbahnen (9) durch Überformung thermoplastischen Materials auf dem Träger (5) gehalten werden.

8. Rotor nach einem der Ansprüche 1 bis 6, wobei die Leiterbahnen (9) anders als durch Überformung auf dem Träger (5) gehalten werden, insbesondere mithilfe von Reliefs (16) des Trägers.

9. Rotor nach einem der vorhergehenden Ansprüche, wobei der Träger (5) auf einer Endseite des Erregerankers (6) angeordnet ist, wobei die Anschlüsse (11) nach außen überstehen.

10. Rotor nach einem der vorhergehenden Ansprüche, wobei der Träger (5) mit einer Basis (5a) und einem Deckel (5b), der Öffnungen (45, 46, 49) aufweist, ausgeführt ist, wobei Pfade in der Basis (5a) des Trägers (5) ausgebildet sind, um die Leiterbahnen (9) zu halten.

11. Rotor nach dem vorhergehenden Anspruch, wobei Enden der Leiterbahnen (9) in Aufnahmen der Basis (5a) des Trägers (5) aufgenommen sind, die insbesondere von Wänden (40) gebildet sind, die mit dem Träger geformt sind.

12. Wechselstromgenerator umfassend einen Rotor (6) nach einem der vorhergehenden Ansprüche.

## Claims

1. Alternator rotor (6), comprising:
- a set of polar wheel field windings (4),
- an exciting armature (2), and
- an electronic power supply circuit (3) supplying power to the set of polar wheel field windings (4) from the exciting armature (2),
the rotor (6) being **characterized in that** the electronic power supply circuit (3) comprises a bearing (5) made of insulating material and conducting tracks (9) held by said bearing, these tracks (9) connecting the exciting conductors to terminals (11) into which electronic components (3a, 3b, 3c) of the electronic power supply circuit (3) are plugged and locked mechanically in place, **characterized**
**in that** the terminals (11) are produced monolithically with at least a part of the conducting tracks (9), and **in that** the terminals (11) are produced by bending the metal used to make the conducting tracks (9), with the said metal having been cut out from she.

2. Rotor according to claim 1, the terminals (11) constituting *fast on* connectors, preferably female, the electronic components (3a, 3b, 3c) being provided with complementary *fast on* connectors (12), preferably male.

3. Rotor according to any of the preceding claims, the conducting tracks (9) being electrically in contact with threaded studs (13) for the attachment of cable terminals (14) connected to cables of the alternator, preferably cables connected to the set of polar wheel field windings (4).

4. Rotor according to any of the preceding claims, the electronic components (3a, 3b, 3c) being diode bridges, preferably single-phased.

5. Rotor according to any of the preceding claims, the exciting armature (2) being multiple-phased, notably three-phased, and double-wounded, a single-phased diode bridge being associated with each phase, the diode bridges being interconnected, and preferably delivering onto a DC bus (30a, 30b).

6. Rotor according to any of the preceding claims, the mechanical locking of the electronic components (3a, 3b, 3c) being performed by bolting, notably using studs (36) fixed to the bearing (5).

7. Rotor according to any of the preceding claims, the conducting tracks (9) being held on the bearing (5) by the overmoulding of thermoplastics material.

8. Rotor according to any of claim 1 to 6, the conducting tracks (9) being held on the bearing (5) in some way other than by overmoulding, notably using reliefs (16) of the bearing.

9. Rotor according to any of the preceding claims, the bearing (5) being positioned on an end face of the exciting armature (6), with the terminals (11) projecting outwards.

10. Rotor according to any of the preceding claims, the bearing (5) being produced in the form of a base (5a) and a cover (5b) comprising openings (45, 46, 49), paths being formed in the base (5a) of the bearing (5) to hold the conducting tracks (9).

11. Rotor according to the preceding claim, ends of the conducting tracks (9) being housed in housings in the base (5a) of the bearing (5), these notably being formed by walls (40) which are moulded with the bearing.

12. Alternator comprising a rotor (6) according to any of the preceding claims.
